# EUROPEAN PATENT SPECIFICATION

(11) **EP 2 992 942 B1**
(45) Date of publication and mention of the grant of the patent: **05.06.2019**
(21) Application number: 14183424.2
(22) Date of filing: 03.09.2014
(51) Int. Cl.: B28B 1/00, B28B 17/04, B29C 64/153, B29C 64/35, B29C 64/364, B01D 46/00, B01D 50/00, B22F 3/105, B29C 67/00

(54) **APPARATUS FOR PRODUCING 3D WORK PIECES BY ADDITIVE MANUFACTURING WITH AN IMPROVED RECYCLING GAS CIRCUIT AND RELATED METHOD USING THE SAME**
VORRICHTUNG ZUR HERSTELLUNG VON 3D WERKSTÜCKEN DURCH SCHICHTWEISES AUFBAUEN MIT VERBESSERTEM RECYCLINGGASKREISLAUF
APPAREIL POUR PRODUIRE DES PIÈCES 3D PAR UNE MÉTHODE DE FABRICATION ADDITIVE COMPORTANT UN CIRCUIT DE RECYCLAGE DE GAZ AMÉLIORÉ

(43) Date of publication of application: 09.03.2016
(73) Proprietor: SLM Solutions Group AG, 23560 Lübeck (DE)
(72) Inventor: Junker, Frank, 41462 Neuss (DE); Pörtner, Stefan, 41179 Mönchengladbach (DE); Wiesner, Andreas, 23560 Lübeck (DE); Schwarze, Dieter, 23560Lübeck (DE)
(74) Representative: Schicker, Silvia

(56) References cited:
- EP-A1- 2 287 126
- WO-A1-92/08592
- WO-A2-2012/095205
- GB-A- 1 214 872
- US-A- 3 871 846
- US-A- 5 474 584
- US-A1- 2006 192 322
- US-A1- 2014 047 808

## Description

The invention relates to an apparatus for producing three-dimensional work pieces by irradiating layers of a raw material powder with electromagnetic or particle radiation which is equipped with an improved gas circuit. The invention further relates to a method of operating such an apparatus for producing three-dimensional work pieces by irradiating layers of a raw material powder with electromagnetic or particle radiation.

Powder bed fusion is an additive layering process by which pulverulent, in particular metallic and/or ceramic raw materials can be processed to three-dimensional work pieces of complex shapes. To that end, a raw material powder layer is applied onto a carrier and subjected to laser radiation in a site selective manner in dependence on the desired geometry of the work piece that is to be produced. The laser radiation penetrating into the powder layer causes heating and consequently melting or sintering of the raw material powder particles. Further raw material powder layers are then applied successively to the layer on the carrier that has already been subjected to laser treatment, until the work piece has the desired shape and size. An apparatus for producing moulded bodies from pulverulent raw materials by a powder bed fusion process is described, for example, in EP 1 793 979 B1. Powder bed fusion may be employed for the production of prototypes, tools, replacement parts, high value components or medical prostheses, such as, for example, dental or orthopaedic prostheses, on the basis of CAD data.

The prior art apparatus comprises a process chamber which accommodates a plurality of carriers for the shaped bodies to be manufactured. A powder layer preparation system comprises a powder reservoir holder that can be moved to and fro across the carriers in order to apply a raw material powder to be irradiated with a laser beam onto the carriers. The process chamber is provided with a protective gas inlet and a protective gas outlet which are connected to a protective gas circuit. Via the protective gas inlet, a protective gas such as, for example, Argon is supplied to the process chamber in order to establish a protective gas atmosphere within the process chamber. Via the protective gas outlet, protective gas which, upon flowing through the process chamber, is loaded with particulate impurities such as, for example, residual raw material powder particles and welding smoke particles is be withdrawn from the process chamber.

Within the protective gas circuit, a filter device is arranged which serves to filter the particulate impurities from the protective gas flowing though the protective gas circuit prior to the protective gas being recirculated to the process chamber via the protective gas inlet. When a filter medium provided in the filter device is loaded with particles separated from the protective gas stream flowing though the protective gas circuit, operation of the apparatus has to be ceased until the filter medium has been exchanged. In case a combustible raw material powder is processed in the process chamber of the apparatus, for fire safety reasons, the filter has to be flooded with water prior to opening the filter and exposing the filter medium loaded with combustible particles to the ambient atmosphere.

US 2006/0192322 A1 relates to an apparatus for forming a three-dimensional object from a powdery layer of a predetermined thickness on a table that is vertically movable within an enclosed space by a cylinder. A laser outputted from a laser generator is irradiated on the powdery layer thereby forming a sintered layer. This process is repeated to form the three-dimensional object. In order to produce a non-oxidizing atmosphere within chamber, nitrogen gas is supplied into the chamber. A fume capturing unit includes an air pump and a filter and captures fumes and powder scattering in the chamber by sucking the nitrogen gas within the chamber through suction ports defined in a sealing portion of the chamber and by causing the nitrogen gas to pass through the filter. A filter can be of the labyrinth type or cyclone type or can be a magnet.

US 5,474,584 relates to an apparatus and method for the treatment of hot, dirty industrial exhaust gases, where a plenum is constructed around an upward exhaust duct as close as possible to the hot source, in which a concentric inlet connects the exhaust duct to the plenum. A first of three chambers in the plenum is a settling chamber, where coarse particles present in the exhaust gas are settled and collected. The settling chamber houses a battery of high efficiency, high temperature cyclones, whereby the gases exhaust the settling chamber through inlets of the cyclone battery, dropping fine particles into a fine particle chamber. The gases after being cleaned by the cyclones go into an exhaust chamber and through a plenum outlet, pass through a servo valve and are taken into a first suction fan which supplies the energy necessary to draw said hot exhaust gases through the apparatus. The exhaust gases from the suction fan are taken to a baghouse which is capable of separating out ultrafine particles present in the exhaust gases which is then passed into a suction fan providing the energy loss due to friction from the outlet of the first suction fan through the bag filters and through an atmospheric discharge-duct. A difference in pressure between a control point, located above the hot gas taken off in the exhaust duct and an existing atmospheric pressure reference point located in the upper part in the exhaust duct just below the atmosphere is measured. A controller opens or closes a servo valve. This controls the gas out flow in the process by suction fan. The electronically controlled differential static pressure is maintained close to zero in all operating conditions, so that the air flow in the upper part of the exhaust duct will also be maintained close to zero.

GB 1 214 872, US 3,871,846, EP 2 287 126 A1 and WO 2012/095205 A2 relate to cyclones and/or filters to purify industrial gases by separating suspended coarse solid particles by cyclones and removing fine particles by a filter.

The invention is directed at the object of providing an apparatus for producing three-dimensional work pieces by irradiating layers of a raw material powder with electromagnetic or particle radiation which can be operated without interruptions for a long time and which allows the production of high-quality work pieces. Further, the invention is directed at the object of operating an apparatus of this kind.

These objects are addressed by an apparatus as defined in claim 1 and a method as defined in claim 7.

An apparatus for producing three-dimensional work pieces comprises a process chamber accommodating a carrier and a powder application device for applying a raw material powder onto the carrier. In principle, the carrier may be a rigidly fixed carrier. Preferably, however, the carrier is designed to be displaceable in vertical direction so that, with increasing construction height of a work piece, as it is built up in layers from the raw material powder, the carrier can be moved downwards in the vertical direction. The raw material powder preferably is a metallic powder, in particular a metal alloy powder, but may also be a ceramic powder or a powder containing different materials. The powder may have any suitable particle size or particle size distribution. It is, however, preferable to process powders of particle sizes < 100 µm.

The apparatus further comprises an irradiation device for selectively irradiating electromagnetic or particle radiation onto the raw material powder applied onto the carrier in order to produce a work piece made of said raw material powder by an additive layer construction method. Hence, the raw material powder applied onto the carrier may be subjected to electromagnetic or particle radiation in a site-selective manner in dependence on the desired geometry of the work piece that is to be produced. The irradiation device preferably is adapted to irradiate radiation onto the raw material powder which causes a site-selective melting of the raw material powder particles. The irradiation device may comprise at least one radiation source, in particular a laser source, and at least one optical unit for guiding and/or processing a radiation beam emitted by the radiation source. The optical unit may comprise optical elements such an object lens, in particular and f-theta lens, and a scanner unit, the scanner unit preferably comprising a diffractive optical element and a deflection mirror.

The process chamber comprises a gas inlet via which a gas, for example, an inert gas may be supplied to the process chamber. Preferably, the process chamber is sealable against the ambient atmosphere, i.e. against the environment surrounding the process chamber, in order to be able to maintain a controlled atmosphere, in particular an inert atmosphere within the process chamber. Thus, for example, an Argon atmosphere or any other suitable inert gas atmosphere may be established within the process chamber. By controlling the atmosphere within the process chamber, the occurrence of undesired chemical reactions, in particular oxidation reactions, upon irradiating the raw material powder with electromagnetic or particle radiation can be prevented.

Furthermore, the process chamber comprises a gas outlet. While the raw material powder applied onto the carrier is selectively irradiated with electromagnetic or particle radiation, gas containing particulate impurities such as, for example, raw material powder particles or welding smoke particles thus may be discharged from the process chamber via the gas outlet. The particulate impurities are removed from the process chamber in order to avoid excessive absorption of radiation energy and/or shielding of the radiation beam emitted by the radiation source of the irradiation device.

The apparatus for producing three-dimensional work pieces further comprises a gas circuit comprising a circulation line connecting the gas outlet of the process chamber to the gas inlet of the process chamber. A filter system is arranged in the circulation line. Thus, via the circulation line, a gas which is discharged from the process chamber can be recirculated to the process chamber, wherein the particulate impurities present in the gas stream can be removed by directing the gas stream exiting the process chamber through the filter system arranged in the circulation line. The gas stream may be conveyed through the circulation line by means of a suitable conveying device such as, for example, a pump which preferably is arranged in the circulation line downstream of the filter system thus ensuring that the conveying device is not exposed to the particulate impurities contained in the gas stream upstream of the filter system.

Finally, the apparatus for producing three-dimensional work pieces comprises a cyclone separator system which is arranged in the circulation line upstream of the filter system. The cyclone separator system comprises at least one cyclone separator which is adapted to remove particulate impurities contained in the gas stream exiting the process chamber from the gas stream without the use of a filter medium through vortex separation. For example, the cyclone separator may contain a cylindrical or conical housing which is supplied with the gas containing particulate impurities in a tangential direction such that the gas/particle mixture within the housing follows a helical flow path. Due to centrifugal forces acting on the particles present in the gas/particle mixture, the particles impinge onto inner walls of the cyclone separator housing and thus are slowed down. As a result, the particles are separated from the gas stream and exit the cyclone separator housing at a bottom end thereof in a gravity-driven manner. Cleaned gas may be discharged from the cyclone separator housing at a top end thereof.

The cyclone separator system of the apparatus for producing three-dimensional work pieces may comprise only one simple cyclone separator as described above. It is, however, of course also conceivable to equip the cyclone separator system with one or more cyclone separator(s) having a specific design such as, for example, a cyclone separator having a secondary gas inlet so as to allow the supply of a secondary gas stream into the cyclone which prevents the particles present in the gas stream from impinging onto the inner walls of the cyclone housing to protect them from excessive wear. In any case, the cyclone separator system allows the removal of a considerable amount of at least the coarse particulate impurities which are present in the gas stream exiting the process chamber prior to the gas stream being supplied to the filter system.

Thus, due to the presence of the cyclone separator system, the particle load of the gas stream supplied to the filter system is significantly reduced resulting in a considerable extension of the service life of the filter system without an exchange of the filter medium present within the filter(s) of the filter system being necessary. The apparatus for producing three-dimensional work pieces hence can be operated without interruptions for a long time which is necessary, for example, to produce a large three-dimensional work piece. In addition, the separation efficiency of the filter system can be maintained at a high level for a long time thus ensuring that the quality of the work piece to be produced is not affected by particulate impurities which cannot be removed from the circulating gas stream due to an overload of the filter system.

In a preferred embodiment of the apparatus, the filter system comprises at least two coarse particle filters arranged parallel to each other in the circulation line. The two coarse particle filters may, for example, be designed in the form of F9 filters having an average degree of efficiency (Em) > 95% for filtering particles having a size of 0.9µm. By arranging two coarse particle filters parallel to each other, the effective filter surface is enlarged and hence the volume flow rate of the gas/particle mixture through the filter medium and hence the pressure difference across the filter medium can be significantly reduced. As a result, the service life of the filters can be extended and the separation efficiency of the filter medium can be significantly enhanced, in particular for separating fine particle from the gas stream. Finally, the arrangement of two coarse particle filters parallel to each other allows an exchange of the filter medium of one filter while the other one is still in operation. As a result, an exchange of the filter medium of one of the two coarse particle filters can be effected without interrupting the operation of the apparatus and hence the build-up of a three-dimensional work piece.

The filter system may further comprise a fine particle filter which may be arranged in the circulation line downstream of the coarse particle filters. The fine particle filter may, for example, be designed in the form of a H13 filter, i.e. a HEPA(High Efficiency Particulate Air Filter)-filter having a separation efficiency of > 99.95%. The arrangement of a fine particle filter downstream of the coarse particle filters ensures that the gas stream recirculated into the process chamber is more or less free of particulate impurities. As a result, the quality of the three-dimensional work piece produced within the process chamber can be maintained over the entire building time.

The cyclone separator system of the apparatus for producing three-dimensional work pieces may comprise a coarse particle cyclone separator and a fine particle cyclone separator which is arranged in the circulation line downstream of the coarse particle cyclone separator. By providing at least two cyclone separators in the cyclone separator system, the separation efficiency of the cyclone separator system can be enhanced allowing a further relief of the filter system.

In a particular preferred embodiment of the apparatus for producing three-dimensional work pieces, the cyclone separator system comprises a fine particle cyclone separator which is designed in the form of a multi-cyclone separator. A multi-cyclone separator comprises a plurality of individual cyclone separators which are arranged in parallel or in series and distinguishes by a particularly high separation efficiency. In case the cyclone separator system comprises a coarse particle cyclone separator and a fine particle cyclone separator which is designed in the form of a multi-cyclone separator, a separation efficiency of the cyclone separator system for particulate impurities present in the gas stream exiting the process chamber of > 99% can be realized.

As a result, the majority of raw material powder particles which are present in the gas stream exiting the process chamber can be removed from the gas stream by means of the cyclone separator system. The filter system then can be operated to mainly filter combustion products such as, for example, welding smoke or soot particles. Especially in case combustible raw material powders such as, for example, aluminum powders, are processed in the process chamber of the apparatus for producing three-dimensional work pieces, the operational safety of the filter system, in particular upon exchanging the filter medium, then can be significantly enhanced, since the filters of the filter system are no longer loaded with a large amount of combustible fine raw material powder particles. Similarly, a fine particle cyclone separator which is designed in the form of a multi-cyclone separator is particularly suitable for separating combustible particles from the gas stream exiting the process chamber, since within the multi-cyclone separator, each individual cyclone separator collects only a small amount of combustible particles thus enhancing the operational safety of the cyclone separator system.

In a the apparatus for producing three-dimensional work pieces, a throttle device is arranged in the circulation line. Furthermore, a differential pressure detection device is provided which is adapted to detect a pressure difference generated in the circulation line across the throttle device. In case a filter of the filter system arranged in the circulation line is increasingly loaded or even clogged, the volume flow of the gas/particle stream flowing through the circulation line and hence also the pressure difference across the throttle device decreases. The pressure difference across the throttle device which is detected by means of the differential pressure detection device thus can be used as a measure for the volume flow rate of the gas/particle mixture flowing through the circulation line.

As a result, direct detection of the volume flow rate which, due to conductive particles present in the gas stream forming conductive layers and hence inducing measuring errors, may be difficult and error-prone can be dispensed with. Instead, the pressure difference across the throttle device can be used as a reliably detectible control value which may be supplied to a control unit adapted to control a conveying device operated to convey the gas containing particulate impurities, which is discharged from the gas outlet of the process chamber through the circulation line, in dependence on said control value, i.e. in dependence on the pressure difference detected by means of the differential pressure detection device. In other words, the control unit, on the basis of the pressure difference across the throttle device, may control the operation of the conveying device, for example a pump arranged in the circulation line, in such a manner that deviations of the pressure difference across the throttle device and hence the volume flow rate of the gas/particle mixture through the circulation line is compensated for.

For example, the control unit may be adapted to compare the pressure difference detected by means of the differential pressure detecting device to a predetermined set pressure difference and to control the conveying device such that the detected pressure difference converges to the predetermined set pressure difference. Specifically, the control unit is adapted to control the conveying device in such a manner that the pressure difference across the throttle device and hence the volume flow rate of the gas/particle mixture through the circulation line is maintained constant independent of the operating state of the cyclone separator system and/or the filter system. For example, the control strategy employed by the control unit may include that the conveying device is controlled so as to reduce or increase the speed of the conveying device in case a difference between the pressure difference detected by means of the differential pressure detection device and the predetermined set pressure difference exceeds a predetermined threshold value. By maintaining the pressure difference across the throttle device and hence the volume flow rate of the gas/particle mixture through the circulation line constant, a constant supply of gas to the process chamber and a constant discharge of gas from the process chamber and hence a constant flow of gas through the process chamber is ensured which is important for the quality of the work piece to be produced within the process chamber.

The differential pressure detection device may comprise a first pressure sensor arranged in the circulation line downstream of the throttle device and a second pressure sensor arranged in the circulation line upstream of the throttle device. The differential pressure detection device then has a simple structure and is easy to operate and to maintain.

In a particular preferred embodiment of the apparatus for producing three-dimensional work pieces, the throttle device is formed by the cyclone separator system arranged in the circulation line. The provision of the separate throttle device then can be dispensed with. Instead, a component which is present in the circulation line and which generates a pressure difference anyway can be employed for obtaining a reliably detectible measure for the volume flow rate of the gas/particle mixture through the circulation line.

A method for operating an apparatus for producing three-dimensional work pieces comprises the step of applying a raw material powder onto a carrier accommodated within a process chamber provided with a gas inlet and a gas outlet. Electromagnetic or particle radiation is selectively radiated onto the raw material powder applied onto the carrier in order to produce a work piece made of said raw material powder by an additive layer construction method. A gas containing particulate impurities which is discharged from the gas outlet of the process chamber is directed through a filter system arranged in a circulation line connecting the gas outlet of the process chamber to the gas inlet of the process chamber. Furthermore, the gas containing particulate impurities is directed through a cyclone separator system arranged in the circulation line upstream of the filter system.

The gas containing particulate impurities may be directed through at least two coarse particle filters arranged parallel to each other in the circulation line. Further, the gas/particle stream may be directed to a fine particle filter arranged in the circulation line downstream of the coarse particle filters.

Alternatively or additionally thereto, the gas containing particulate impurities may be directed though a coarse particle cyclone separator and a fine particle cyclone separator which is arranged in the circulation line downstream of the coarse particle cyclone separator. The fine particle cyclone separator may be designed in the form of a multi-cyclone separator.

The method further comprises the step of detecting a pressure difference generated in the circulation line across a throttle device arranged in the circulation line. A conveying device which is operated so as to convey the gas containing particulate impurities which is discharged from the gas outlet of the process chamber through the circulation line is controlled in dependence on the detected pressure difference.

In particular, the detected pressure difference may be compared to a predetermined set pressure difference and the conveying device may be controlled such that the detected pressure difference converges to the predetermined set pressure difference.

The pressure difference may be detected by means of a differential pressure detection device comprising a first pressure sensor arranged in the circulation line downstream of a throttle device and a second pressure sensor arranged in the circulation lien upstream of the throttle device.

The throttle device may be formed by the cyclone separator system arranged in the circulation line.

Preferred embodiments of the invention in the following are explained in greater detail with reference to the accompanying schematic drawings, in which:
- Figure 1: shows an apparatus for producing three-dimensional work pieces, and
- Figure 2: shows a detailed view of a gas circuit of the apparatus for producing three-dimensional work pieces according to Figure 1.

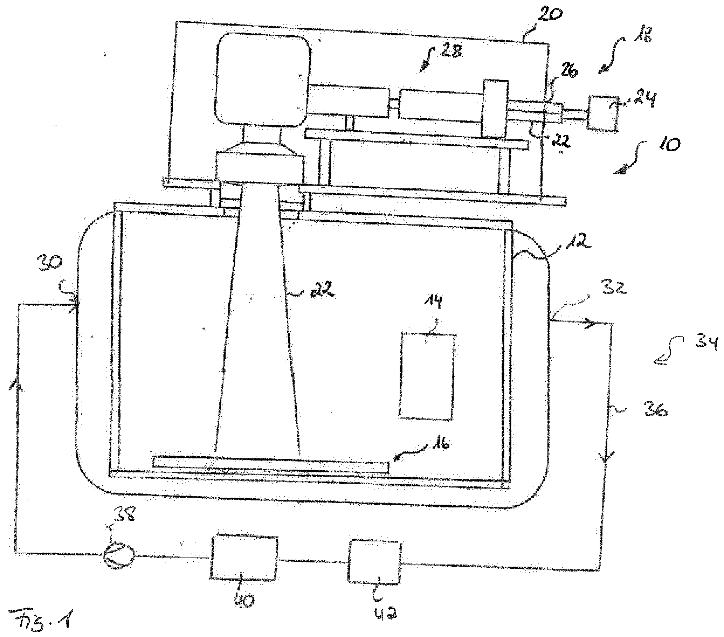

Figure 1 shows an apparatus 10 for manufacturing a component by an additive layer construction method. The apparatus 10 comprises a process chamber 12. A powder application device 14, which is disposed in the process chamber 12, serves to apply a raw material powder onto a carrier 16. The process chamber 12 is sealable against the ambient atmosphere, i.e. against the environment surrounding the process chamber 12. The carrier 16 is designed to be displaceable in a vertical direction so that, with increasing construction height of a component, as it is built up in layers from the raw material powder on the carrier 16, the carrier 16 can be moved downwards in the vertical direction.

The apparatus 10 further comprises an irradiation device 18 for selectively irradiating laser radiation onto the raw material powder applied onto the carrier 16. By means of the irradiation device 18, the raw material powder applied onto the carrier 16 may be subjected to laser radiation in a site-selective manner in dependence on the desired geometry of the component that is to be produced. The irradiation device 18 has a hermetically sealable housing 20. A radiation beam 22, in particular a laser beam, provided by a radiation source 24, in particular a laser source which may, for example, comprise a diode pumped Ytterbium fibre laser emitting laser light at a wavelength of approximately 1070 to 1080 nm is directed into the housing 20 via an opening 26.

The irradiation device 18 further comprises an optical unit 28 for guiding and processing the radiation beam 22. The optical unit 28 may comprise a beam expander for expanding the radiation beam 22, a scanner and an object lens. Alternatively, the optical unit 28 may comprise a beam expander including a focusing optic and a scanner unit. By means of the scanner unit, the position of the focus of the radiation beam 22 both in the direction of the beam path and in a plane perpendicular to the beam path can be changed and adapted. The scanner unit may be designed in the form of a galvanometer scanner and the object lens may be an f-theta object lens.

During operation of the apparatus 10, a first layer of a component to be produced is generated on the carrier 16 by selectively irradiating the raw material powder layer applied onto the carrier 16 with the radiation beam 22. The radiation beam 22 is directed over the raw material powder layer applied onto the carrier 16 in accordance with CAD data of the component to be produced. After the first layer of the component to be produced is completed, the carrier 16 is lowered in a vertical direction allowing the application of a successive powder layer by means of the powder application device 14. Thereafter, the successive powder layer is irradiated by means of the irradiation device 18. Thus, layer by layer, the component is built up on the carrier 16.

The process chamber 12 is provided with a gas inlet 30 and a gas outlet 32. Via the gas inlet 30, a gas, for example an inert gas provided by an inert gas source (not shown), is supplied to the process chamber 12. Within the process chamber 12, the gas stream takes up particulate impurities such as raw material powder particles and combustion products such as, for example, welding smoke and soot particles. Therefore, at the gas outlet 32 of the process chamber, a gas stream containing particulate impurities is discharged from the process chamber 12.The gas/particle mixture exiting the process chamber 12 is supplied to a gas circuit 34 which comprises a circulation line 36 connecting the gas outlet 32 of the process chamber 12 to the gas inlet 30 of the process chamber 12. Thus, via the circulation line 36, gas discharged from the process chamber 12 via the gas outlet 32 can be recirculated to the process chamber 12. A conveying device 38 which is designed in the form of a pump and which is arranged in the circulation line 36 serves to convey the gas/particle mixture exiting the process chamber 12 via the gas outlet 32 through the circulation line 36.

However, in order to avoid excessive absorption of radiation energy and/or shielding of the radiation beam 22 emitted by the radiation source 24 of the irradiation device 18, the particulate impurities which are present in the gas stream exiting the process chamber 12 via the gas outlet 32 have to be removed from the gas stream before the gas stream is recirculated to the process chamber 12 via the gas inlet 30. Therefore, a filter system 40 and a cyclone separator system 42 which are explained in greater detail below are arranged in the circulation line 36 upstream of the conveying device 38.

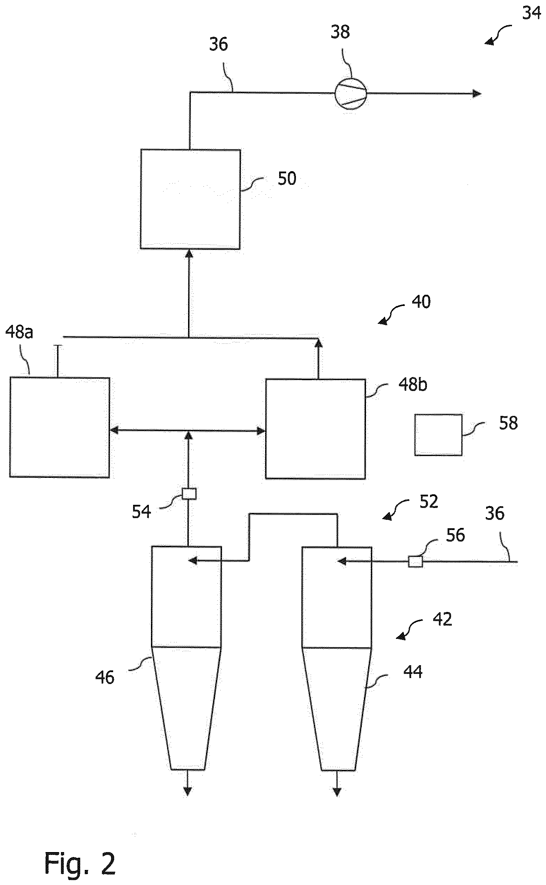

As becomes apparent from Figure 2, the cyclone separator system 42 which is arranged in the circulation line 36 of the gas circuit 34 upstream of the filter system 40 comprises a coarse particle cyclone separator 44. Furthermore, a fine particle cyclone separator 46 is arranged in the circulation line 36 downstream of the coarse particle separator 44. The fine particle cyclone separator 46 is designed in the form of a multi-cyclone separator, i.e. it comprises a plurality of individual cyclone separators arranged parallel to each other (not shown in detail in Figure 2). By means of the cyclone separator system 42, the majority of the raw material powder particles which are present in gas stream exiting the process chamber 12 can be separated from the gas stream and discharged from the coarse particle cyclone separator 44 and the fine particle cyclone separator 46 at bottom ends thereof. The gas stream exiting the cyclone separator system 42 thus essentially contains particulate impurities in the form of combustion products such as, for example, welding smoke or soot particles.

These particles are removed from the gas stream by means of the filter system 40 which comprises two coarse particle filters 48a, 48b which are arranged parallel to each other in the circulation line 36. The coarse particle filters 48a, 48b are designed in the form of F9 filters and have, due to the enlarged filter medium surface as compared to a single coarse particle filter, not only an extended service life before an exchange of a filter medium is necessary, but also an increased separation efficiency which results from the decrease of the volume flow rate of the gas/particle stream through the filter medium of the filters 48a, 48b. Finally, a fine particle filter 50 which is designed in the form of a HEPA-filter H13 is arranged in the circulation line 36 downstream of the coarse particle filters 48a, 48b. By means of the fine particle filter 50, residual particulate impurities can be removed from the gas stream flowing through the circulation line 36 in a reliable manner. The gas recirculated to the process chamber 12 via the gas inlet 30 thus is substantially free of particulate impurities.

Since in the gas circuit 34 of the apparatus 10 the cyclone separator system 42 already removes the majority of the raw material powder particles discharged from the process chamber 12 from the gas stream flowing through the circulation line 36, the loading of the filter system 40 with these particles can be significantly reduced resulting in a significant increase in the service life of the filters 48a, 48b, 50 before an exchange of the filter medium is necessary. Furthermore, due to a reduction of the volume flow rate of the gas/particle mixture through the filter medium of the filters 48a, 48, 50 which results from reduced clogging of the filter medium, an enhanced separation efficiency of the filters 48a, 48b, 50 can be realized. Finally, in case combustible raw material powders are processed within the process chamber 12, the filters 48a, 48b, 50 are no longer loaded with a large amount of combustible powder particles. As a result, operational safety of the filter system 40 can be increased, in particular during exchange of the filter medium.

The apparatus 10 further comprises a pressure detection device 52 having a first pressure sensor 54 arranged in the circulation line 36 downstream of the cyclone separator system 42 and a second pressure sensor 56 arranged in the circulation line 36 upstream of the cyclone separator system 42. The differential pressure detection device 52 serves to detect a pressure difference generated in the circulation line 36 across the cyclone separator system 42. Hence, the cyclone separator system 42 acts as a throttle device generating the built-up of a differential pressure within the circulation line 36 which may be used as a measure for the volume flow rate of the gas/particle mixture through the circulation line 36. Hence, direct measurement of the volume flow rate of the gas/particle mixture flowing through the circulation line 36, which may be error-prone due to the formation of conductive particle layers, in particular in case metallic raw material powders are processed within the process chamber 12 of the apparatus 10, can be dispensed with. Instead, a control unit 58 which is adapted to control the conveying device 38 can be supplied with the pressure difference across the cyclone separator system 42 which is detected by means of the pressure detection device 52.

The control unit 58 then can control the conveying device 38 in dependence on the pressure difference detected by means of the differential pressure detection device 52, i.e. in dependence on a measure for the volume flow rate of the gas/particle mixture through the circulation line which may change as a result of the operational state of the filter system 40 and/or the cyclone separator system 42. In particular, the volume flow rate of the gas/particle mixture through the circulation line 36 and hence the differential pressure detected by means of the differential pressure detection device 52 may decrease when the filters 48a, 48b, 50 of the filter system become increasingly loaded with particulate impurities separated from the gas stream. The control unit 58 then may control the conveying device 38 so as to compensate for said change in the volume flow rate of the gas/particle mixture through the circulation line 36 in order to ensure the supply of a constant volume flow of clean gas to the process chamber 12 and hence a constant quality of the three-dimensional work piece to be produced therein.

In particular, the control unit 58 compares the pressure difference detected by means of the differential pressure detection device 52 to a predetermined set pressure difference and controls the conveying device 38 such that the detected pressure difference converges to the predetermined set pressure difference. Specifically, the control unit 58 controls the conveying device 38 so as to increase or decrease the operating speed of the conveying device 38 in case a difference between the actual pressure difference detected by means of the differential pressure detection device 52 and the predetermined set pressure difference exceeds a predetermined threshold value.

## Claims

1. Apparatus (10) for producing three-dimensional work pieces, the apparatus (10) comprising:
- a process chamber (12) accommodating a carrier (16) and a powder application device (14) for applying a raw material powder onto the carrier (16) and being provided with a gas inlet (30) and a gas outlet (32),
- an irradiation device (18) for selectively irradiating electromagnetic or particle radiation onto the raw material powder applied onto the carrier (16) in order to produce a work piece made of said raw material powder by an additive layer construction method, and
- a gas circuit (34) comprising a circulation line (36) connecting the gas outlet (32) of the process chamber (12) to the gas inlet (30) of the process chamber (12) and a filter system (40) arranged in the circulation line (36),
**characterized in that** the apparatus further comprises:
- a cyclone separator system (42) arranged in the circulation line (36) upstream of the filter system (40),
- a throttle device arranged in the circulation line (36),
- a differential pressure detection device (52) adapted to detect a pressure difference generated in the circulation line (36) across the throttle device, and
- a control unit (58) adapted to control a conveying device (38) which is operated so as to convey a gas containing particulate impurities which is discharged from the gas outlet (32) of the process chamber (12) through the circulation line (36) in dependence on the pressure difference detected by means of the differential pressure detection device (52),
wherein the throttle device is formed by the cyclone separator system (42) arranged in the circulation line (36).

2. Apparatus according to claim 1,
wherein the filter system (40) comprises:
- at least two coarse particle filters (48a, 48b) arranged parallel to each other in the circulation line (36), and/or
- a fine particle filter (50) which, in particular, is arranged in the circulation line (36) downstream of the coarse particle filters (48a, 48b).

3. Apparatus according to claim 1 or 2,
wherein the cyclone separator system (42) comprises:
- a coarse particle cyclone separator (44), and/or
- a fine particle cyclone separator (46) which, in particular, is arranged in the circulation line (36) downstream of the coarse particle cyclone separator (44).

4. Apparatus according to claim 3,
wherein the fine particle cyclone separator (46) is designed in the form of a multi-cyclone separator.

5. Apparatus according to any one of claims 1 to 4,
wherein the control unit (58) is adapted to compare the pressure difference detected by means of the differential pressure detection device (52) to a predetermined set pressure difference and to control the conveying device (38) such that the detected pressure difference converges to the predetermined set pressure difference.

6. Apparatus according to any one of claims 1 to 5,
wherein the differential pressure detection device (52) comprises a first pressure sensor (54) arranged in the circulation line (36) downstream of the throttle device and a second pressure sensor (56) arranged in the circulation line (36) upstream of the throttle device.

7. Method for operating an apparatus (10) for producing three-dimensional work pieces, comprising:
- applying a raw material powder onto a carrier (16) accommodated within a process chamber (12) provided with a gas inlet (30) and a gas outlet (32),
- selectively irradiating electromagnetic or particle radiation onto the raw material powder applied onto the carrier (16) in order to produce a work piece made of said raw material powder by an additive layer construction method, and
- directing a gas containing particulate impurities which is discharged from the gas outlet (32) of the process chamber (12) through a filter system (40) arranged in a circulation line (36) connecting the gas outlet (32) of the process chamber (12) to the gas inlet (30) of the process chamber (12),
**characterized by**:
- directing the gas containing particulate impurities through a cyclone separator system (42) arranged in the circulation line (36) upstream of the filter system (40),
- detecting a pressure difference generated in the circulation line (36) across a throttle device arranged in the circulation line (36), and
- controlling a conveying device (38) which is operated so as to convey the gas containing particulate impurities which is discharged from the gas outlet (32) of the process chamber (12) through the circulation line (36) in dependence on the detected pressure difference,
wherein the throttle device is formed by the cyclone separator system (42) arranged in the circulation line (36).

8. Method according to claim 7,
wherein the gas containing particulate impurities is directed through
- at least two coarse particle filters (48a, 48b) arranged parallel to each other in the circulation line (36), and/or
- a fine particle filter (50) which, in particular, is arranged in the circulation line (36) downstream of the coarse particle filters (48a, 48b).

9. Method according to claim 7 or 8,
wherein the gas containing particulate impurities is directed through
- a coarse particle cyclone separator (44), and/or
- a fine particle cyclone separator (46) which, in particular, is arranged in the circulation line (36) downstream of the coarse particle cyclone separator (44), the fine particle cyclone separator (46) in particular being designed in the form of a multi-cyclone separator.

10. Method according to any one of claims 7 to 9,
wherein the detected pressure difference is compared to a predetermined set pressure difference and the conveying device (38) is controlled such that the detected pressure difference converges to the predetermined set pressure difference.

11. Method according to any one of claims 7 to 10,
wherein the pressure difference is detected by means of a differential pressure detection device (52) comprising a first pressure sensor (54) arranged in the circulation line (36) downstream of the throttle device and a second pressure sensor (56) arranged in the circulation line (36) upstream of the throttle device.

## Patentansprüche

1. Vorrichtung (10) zum Erzeugen eines dreidimensionalen Werkstücks, wobei die Vorrichtung (10) umfasst:
- eine Prozesskammer (12), die einen Träger (16) und eine Pulverauftragsvorrichtung (14) zum Aufbringen eines Rohstoffpulvers auf den Träger (16) aufnimmt und die mit einem Gaseinlass (30) und einem Gasauslass (32) versehen ist,
- eine Bestrahlungseinrichtung (18) zum selektiven Abstrahlen von elektromagnetischer Strahlung oder Teilchenstrahlung auf das auf den Träger (16) aufgebrachte Rohstoffpulver, um durch ein additives Schichtaufbauverfahren ein aus dem Rohstoffpulver bestehendes Werkstück zu erzeugen, und
- einen Gaskreislauf (34), der eine Kreislaufleitung (36), welche den Gasauslass (32) der Prozesskammer (12) mit dem Gaseinlass (30) der Prozesskammer (12) verbindet, und ein in der Kreislaufleitung (36) angeordnetes Filtersystem (40) umfasst,
**dadurch gekennzeichnet, dass** die Vorrichtung ferner umfasst:
- ein Zyklontrennsystem (42), das stromaufwärts des Filtersystems (40) in der Kreislaufleitung (36) angeordnet ist,
- eine in der Kreislaufleitung (36) angeordnete Drosseleinrichtung,
- eine Differenzdruckerfassungseinrichtung (52), die dazu eingerichtet ist, eine in der Kreislaufleitung (36) über die Drosseleinrichtung erzeugte Druckdifferenz zu erfassen, und
- eine Steuereinheit (58), die dazu eingerichtet ist, eine Fördereinrichtung (38) zu steuern, die betrieben wird, um ein partikelförmige Verunreinigungen enthaltendes Gas, das von dem Gasauslass (32) der Prozesskammer (12) abgeführt wird, in Abhängigkeit der mittels der Differenzdruckerfassungseinrichtung (52) erfassten Druckdifferenz durch die Kreislaufleitung (36) zu fördern,
wobei die Drosseleinrichtung durch das in der Kreislaufleitung (36) angeordnete Zyklontrennsystem (42) gebildet wird.

2. Vorrichtung nach Anspruch 1,
wobei das Filtersystem (40) umfasst:
- mindestens zwei Grobpartikelfilter (48a, 48b), die parallel zueinander in der Kreislaufleitung (36) angeordnet sind, und/oder
- einen Feinpartikelfilter (50), der insbesondere stromabwärts der Grobpartikelfilter (48a, 48b) in der Kreislaufleitung (36) angeordnet ist.

3. Vorrichtung nach Anspruch 1 oder 2,
wobei das Zyklontrennsystem (42) umfasst:
- einen Grobpartikelzyklonseparator (44) und/oder
- einen Feinpartikelzyklonseparator (46), der insbesondere stromabwärts des Grobpartikelzyklonseparators (44) in der Kreislaufleitung (36) angeordnet ist.

4. Vorrichtung nach Anspruch 3,
wobei der Feinpartikelzyklonseparator (46) in Form eines Multizyklonseparators ausgebildet ist.

5. Vorrichtung nach einem der Ansprüche 1 bis 4,
wobei die Steuereinheit (58) dazu eingerichtet ist, die mittels der Differenzdruckerfassungseinrichtung (52) erfasste Druckdifferenz mit einer vorbestimmten Soll-Druckdifferenz zu vergleichen und die Fördereinrichtung (38) derart zu steuern, dass sich die erfasste Druckdifferenz der vorbestimmten Soll-Druckdifferenz annähert.

6. Vorrichtung nach einem der Ansprüche 1 bis 5,
wobei die Differenzdruckerfassungseinrichtung (52) einen stromabwärts der Drosseleinrichtung in der Kreislaufleitung (36) angeordneten ersten Drucksensor (54) und einen stromaufwärts der Drosseleinrichtung in der Kreislaufleitung (36) angeordneten zweiten Drucksensor (56) umfasst.

7. Verfahren zum Betreiben einer Vorrichtung (10) zum Erzeugen eines dreidimensionalen Werkstücks, umfassend:
- Aufbringen eines Rohstoffpulvers auf einen Träger (16), der in einer Prozesskammer (12) aufgenommen ist, die mit einem Gaseinlass (30) und einem Gasauslass (32) versehen ist,
- selektives Abstrahlen von elektromagnetischer Strahlung oder Teilchenstrahlung auf das auf den Träger (16) aufgebrachte Rohstoffpulver, um durch ein additives Schichtaufbauverfahren ein aus dem Rohstoffpulver bestehendes Werkstück zu erzeugen, und
- Leiten eines partikelförmige Verunreinigungen enthaltenden Gases, das von dem Gasauslass (32) der Prozesskammer (12) abgeführt wird, durch ein Filtersystem (40), das in einer Kreislaufleitung (36) angeordnet ist, welche den Gasauslass (32) der Prozesskammer (12) mit dem Gaseinlass (30) der Prozesskammer (12) verbindet,
**gekennzeichnet durch**:
- Leiten des partikelförmige Verunreinigungen enthaltenden Gases durch ein Zyklontrennsystem (42), das stromaufwärts des Filtersystems (40) in der Kreislaufleitung (36) angeordnet ist,
- Erfassen einer über eine in der Kreislaufleitung (36) angeordnete Drosseleinrichtung in der Kreislaufleitung (36) erzeugten Druckdifferenz, und
- Steuern einer Fördereinrichtung (38), die betrieben wird, um das partikelförmige Verunreinigungen enthaltende Gas, das von dem Gasauslass (32) der Prozesskammer (12) abgeführt wird, in Abhängigkeit der erfassten Druckdifferenz durch die Kreislaufleitung (36) zu fördern,
wobei die Drosseleinrichtung durch das in der Kreislaufleitung (36) angeordnete Zyklontrennsystem (42) gebildet wird.

8. Verfahren nach Anspruch 7,
wobei das partikelförmige Verunreinigungen enthaltende Gas durch
- mindestens zwei Grobpartikelfilter (48a, 48b), die parallel zueinander in der Kreislaufleitung (36) angeordnet sind, und/oder
- einen Feinpartikelfilter (50), der insbesondere stromabwärts der Grobpartikelfilter (48a, 48b) in der Kreislaufleitung (36) angeordnet ist,
geleitet wird.

9. Verfahren nach Anspruch 7 oder 8,
wobei das partikelförmige Verunreinigungen enthaltende Gas durch
- einen Grobpartikelzyklonseparator (44) und/oder
- einen Feinpartikelzyklonseparator (46), der insbesondere stromabwärts des Grobpartikelzyklonseparators (44) in der Kreislaufleitung (36) angeordnet ist,
geleitet wird, wobei der Feinpartikelzyklonseparator (46) insbesondere in Form eines Multizyklonseparators ausgebildet ist.

10. Verfahren nach einem der Ansprüche 7 bis 9,
wobei die erfasste Druckdifferenz mit einer vorbestimmten Soll-Druckdifferenz verglichen wird und die Fördereinrichtung (38) derart gesteuert wird, dass sich die erfasste Druckdifferenz der vorbestimmten Soll-Druckdifferenz annähert.

11. Verfahren nach einem der Ansprüche 7 bis 10,
wobei die Druckdifferenz mittels einer Differenzdruckerfassungseinrichtung (52) erfasst wird, die einen stromabwärts der Drosseleinrichtung in der Kreislaufleitung (36) angeordneten ersten Drucksensor (54) und einen stromaufwärts der Drosseleinrichtung in der Kreislaufleitung (36) angeordneten zweiten Drucksensor (56) umfasst.

## Revendications

1. Appareil (10) de production de pièces tridimensionnelles, l'appareil (10) comprenant :
- une chambre de processus (12) logeant un support (16) et un dispositif d'application de poudre (14) pour appliquer une matière première en poudre sur le support (16) afin de produire une pièce fabriquée en cette matière première en poudre selon un procédé de construction par couche additive, et
- un circuit de gaz (34) comprenant une conduite de circulation (36) raccordant la sortie de gaz (32) de la chambre de processus (12) à l'entrée de gaz (30) de la chambre de processus (12) et un système de filtre (40) disposé dans la conduite de circulation (36),
**caractérisé en ce que** l'appareil comprenant en outre :
- un système de séparateur à cyclone (42) disposé dans la conduite de circulation (36) en amont du système de filtre (40),
- un dispositif d'étranglement disposé dans la conduite de circulation (36),
- un dispositif de détection de pression différentielle (52) adapté à détecter une pression différentielle produite dans la conduite de circulation (36) à travers le dispositif d'étranglement, et
- une unité de commande (58) adaptée à commander un dispositif de transport (38) qui est utilisé de manière à transporter un gaz contenant des impuretés de particule qui est évacué par la sortie de gaz (32) de la chambre de processus (12) à travers la conduite de circulation (36) en fonction de la différence de pression détectée au moyen du dispositif de détection de pression différentielle (52),

2. Appareil selon la revendication 1,
le système de filtre (40) comprenant :
- au moins deux filtres à particules grossières (48a, 48b) disposées parallèles l'un par rapport à l'autre dans la conduite de circulation (36), et/ou
- un filtre à particules fines (50) qui, en particulier, est disposé dans la conduite de circulation (36) en aval des filtres à particules grossières (48a, 48b).

3. Appareil selon la revendication 1 ou 2,
le système de séparateur à cyclone (44) comprenant :
- un séparateur à cyclone de particules grossières (44), et/ou
- un séparateur à cyclone de particules fines (46) qui, en particulier est disposé dans la conduite de circulation (36) en aval du séparateur à cyclone de particules grossières (44).

4. Appareil selon la revendication 3,
le séparateur à cyclone de particules fines (46) étant conçu sous la forme d'un séparateur à cyclones multiples.

5. Appareil selon l'une quelconque des revendications 1 à 4,
l'unité de commande (58) étant adaptée à comparer la différence de pression détectée au moyen du dispositif de détection de pression différentielle (52) à une différence de pression d'ouverture prédéfinie et à commander le dispositif de transport (38) de manière à ce que la différence de pression détectée coïncide avec la différence de pression d'ouverture prédéfinie.

6. Appareil selon l'une quelconque des revendications 1 à 5,
le dispositif de détection de pression différentielle (52) comprenant un premier capteur de pression (54) disposé dans la conduite de circulation (36) en aval du dispositif d'étranglement et un second capteur de pression (56) disposé dans la conduite de circulation (36) en amont du dispositif d'étranglement.

7. Procédé de fonctionnement d'un appareil (10) destiné à produire des pièces usinées tridimensionnelles, consistant à :
- appliquer une matière première en poudre sur un support (16) logé dans une chambre de processus (12) pourvue d'une entrée de gaz (30) et d'une sortie de gaz (32),
- soumettre sélectivement au rayonnement particulaire ou électromagnétique la matière première en poudre appliquée sur le support (16) afin de produire une pièce fabriquée dans cette matière première en poudre selon un procédé de fabrication additive, et
- diriger un gaz contenant des impuretés particulaires qui est évacué par la sortie de gaz (32) de la chambre de processus (12) par l'intermédiaire d'un système de filtre (40) disposé dans une conduite de circulation (36) raccordant la sortie de gaz (32) de la chambre de processus (12) à l'entrée de gaz (30) de la chambre de processus (12),
**caractérisé par** :
- la direction du gaz contenant des impuretés particulaires à travers un système de séparateur à cyclone (42) disposé dans la conduite de circulation (36) en amont du système de filtre (40),
- la détection d'une différence de pression produite dans la conduite de circulation (36) dans le dispositif d'étranglement disposé dans la conduite de circulation (36), et
- la commande d'un dispositif de transport (38) qui est utilisé pour transporter le gaz contenant les impuretés particulaires qui est évacué de la sortie de gaz (32) de la chambre de processus (12) à travers la conduite de circulation (36) en fonction de la différence de pression détectée,
le dispositif d'étranglement étant formé par le système de séparateur à cyclone (42) disposé dans la conduite de circulation (36).

8. Procédé selon la revendication 7,
le gaz contenant les impuretés particulaires étant dirigé à travers
- au moins deux filtres à particules grossières (48a, 48b) disposés parallèles l'un à l'autre dans la conduite de circulation (36), et/ou
- un filtre à particules fines (50) qui, en particulier, est disposé dans la conduite de circulation (36) en aval des filtres à particules grossières (48a, 48b).

9. Procédé selon la revendication 7 ou 8,
le gaz contenant les impuretés particulaires étant dirigé à travers
- un séparateur à cyclone de particules grossières (44) et/ou
- un séparateur à cyclone de particules fines (46) qui, en particulier, est disposé dans la conduite de circulation (36) en aval du séparateur à cyclone de particules grossières (44), le séparateur à cyclone de particules fines (46) en particulier étant conçu sous la forme d'un séparateur à cyclones multiples.

10. Procédé selon l'une quelconque des revendications 7 à 9,
la différence de pression détectée étant comparée à une différence de pression d'ouverture prédéfinie et le dispositif de transport (38) étant réglé de sorte que la différence de pression détectée coïncide avec la différence de pression d'ouverture prédéfinie.

11. Procédé selon l'une quelconque des revendications 7 à 10,
la différence de pression étant détectée au moyen d'un dispositif de détection de pression différentielle (52) comprenant un premier capteur de pression (54) disposé dans la conduite de circulation (36) en aval du dispositif d'étranglement et un second capteur de pression (56) disposé dans la conduite de circulation (36) en aval du dispositif d'étranglement.
